# EUROPÄISCHE PATENTSCHRIFT

(11) **EP 2 007 600 B1**
(45) Veröffentlichungstag und Bekanntmachung des Hinweises auf die Patenterteilung: **03.11.2010**
(21) Anmeldenummer: 06840875.6
(22) Anmeldetag: 19.12.2006
(51) Int. Cl.: F24D 3/08

(54) **KOMBINIERTES HEIZUNGS-/WARMWASSERSYSTEM FÜR EIN FAHRZEUG**
COMBINED HEATING/HOT WATER SYSTEM FOR A VEHICLE
SYSTEME COMBINE EAU CHAUDE/CHAUFFAGE POUR UN VEHICULE

(30) Priorität: 20.02.2006 DE 102006007777
(43) Veröffentlichungstag der Anmeldung: 31.12.2008
(73) Patentinhaber: Webasto AG, 82131 Stockdorf (DE)
(72) Erfinder: Fiumidinisi, Alessandro, 20016 Pero (IT)
(74) Vertreter: Epping - Hermann - Fischer
(86) Internationale Anmeldenummer: PCT/DE2006/002277
(87) Internationale Veröffentlichungsnummer: WO 2007/095877

(56) Entgegenhaltungen:
- DE-U1-202004 003 914

## Beschreibung

Die Erfindung betrifft ein kombiniertes Heizungs-/Warmwassersystem für ein Fahrzeug und ein Fahrzeug mit einem kombinieren Heizungs-/Warmwassersystem.

Derartige kombinierte Heizungs-/Warmwassersysteme können etwa zur Beheizung und zur Warmwasserversorgung von Campingfahrzeugen, Reisemobilen, Wasserfahrzeugen und dergleichen eingesetzt werden.

Ein solches kombiniertes Heizungs-/Warmwassersystem für ein Fahrzeug ist beispielsweise aus der deutschen Gebrauchsmusterschrift DE 20 2004 003 914 U1 bekannt. Das Heizungs-/Warmwassersystem hat eine Luftheizvorrichtung, einen Luftkanal, mit dem die Luftheizvorrichtung lufttechnisch mit einem zu beheizenden Innenraum des Fahrzeugs gekoppelt ist, und einen Ventilator, mittels dem in der Luftheizvorrichtung erwärmte Luft in den zu beheizenden Innenraum des Fahrzeugs einbringbar ist. Die Luftheizung zum bedarfsweisen Erwärmen eines Luftstroms ist mit einem Luft-Fluid-Wärmetauscher verbunden, über den Wärme an einen Wärmeverbraucher abgegeben werden kann. Der Wärmeverbraucher kann beispielsweise ein Brauchwassersystem sein. Damit kann ein kombiniertes Heizungs-/Warmwassersystem für ein Fahrzeug geschaffen werden, bei dem nur ein einziger Energieträger eingesetzt werden muss.

Die Aufgabe der Erfindung ist es, ein kombiniertes Heizungs-/Warmwassersystem für ein Fahrzeug zu schaffen, das sicher im Betrieb ist, einen hohen energetischen Wirkungsgrad aufweist und eine komfortable Handhabung durch den Nutzer bietet.

Die Aufgabe wird gelöst durch die Merkmale des unabhängigen Patentanspruchs. Vorteilhafte Weiterbildungen der Erfindung sind in den Unteransprüchen gekennzeichnet.

Gemäß eines ersten Aspekts zeichnet sich die Erfindung aus durch ein kombiniertes Heizungs-/Warmwassersystem für ein Fahrzeug mit einer Luftheizvorrichtung, mindestens einem Luftkanal, mit dem die Luftheizvorrichtung lufttechnisch mit einem zu beheizenden Innenraum des Fahrzeugs Koppelbar ist, einem Ventilator, mittels dem in der Luftheizvorrichtung erwärmte Luft in den zu beheizenden Innenraum des Fahrzeugs einbringbar ist, einem in einer Ausnehmung der Luftheizvorrichtung angeordneten Warmwasserspeicher, einer ersten Rohrleitung, mit der der Warmwasserspeicher hydraulisch mit einer in dem Fahrzeug angeordneten Zapfstelle Koppelbar ist, und einer zweiten Rohrleitung, mit der der Warmwasserspeicher hydraulisch mit einem Wassertank gekoppelt ist, wobei mindestens eine der Rohrleitungen in dem Luftkanal bzw. einem der Luftkanäle angeordnet ist.

Damit kann zum einen eine Temperierung der mindestens einen Rohrleitung, die in dem mindestens einen Luftkanal angeordnet ist, erreicht werden. Dies ist besonders vorteilhaft, da üblicherweise bei der Außerbetriebnahme des kombinierten Heizungs-/Warmwassersystems die Temperatur des Wassers in den Rohrleitungen des Warmwassersystems auf Umgebungstemperatur zurückgeht. Durch die Anordnung der Rohrleitung in dem mindestens einen Luftkanal ist es möglich, dies zu verhindern, da die Rohrleitung in diesem Fall von temperierter Luft umspült werden kann. Des weiteren ist eine Platz sparende Ausführung des Verbunds aus Luftkanal und Rohrleitung möglich.

In einer bevorzugten Ausführungsform der Erfindung ist der erste Luftkanal stromabwärts der Luftheizvorrichtung und stromaufwärts des zu beheizenden Innenraums des Fahrzeugs angeordnet, und mindestens eine der Rohrleitungen ist in dem ersten Luftkanal angeordnet. Damit ist es möglich, die im Luftkanal angeordnete Rohrleitung mittels Wärme aus der Luftheizvorrichtung zu temperieren. Dies ist besonders vorteilhaft, wenn die Luftheizvorrichtung eine Niedertemperaturheizvorrichtung ist, da dann eine Anpassung der Temperatur der mindestens einen Rohrleitung an die Temperatur der durch die Luftheizvorrichtung erwärmten Luft besonders gut möglich ist. Ist das kombinierte Heizungs-/Warmwassersystems außer Betrieb, so kann, je nach Anordnung des kombinierten Heizungs-/Warmwassersystems, durch Ausbildung einer Konvektionsströmung zwischen kombiniertem Heizungs-/Warmwassersystems und dem zu beheizenden Innenraum des Fahrzeugs die mindestens eine Rohrleitung von warmer Luft umspült und damit temperiert werden.

In einer weiteren besonders bevorzugten Ausführungsform der Erfindung ist der zweite Luftkanal stromaufwärts der Luftheizvorrichtung und stromabwärts des zu beheizenden Innenraums des Fahrzeugs angeordnet, und mindestens eine der Rohrleitungen ist in dem zweiten Luftkanal angeordnet. Dies ermöglicht eine besonders gleichmäßige Temperierung der mindestens einen Rohrleitung durch Wärme aus dem zu beheizenden Innenraum des Fahrzeugs. Wärme aus dem zu beheizenden Innenraum des Fahrzeugs kann so die mindestens eine Rohrleitung umströmen und diese temperieren. Ist das kombinierte Heizungs-/Warmwassersystems außer Betrieb, so ist es auch bei dieser Ausführungsform möglich, dass sich eine Konvektionsströmung zwischen kombiniertem Heizungs-/Warmwassersystems und dem zu beheizenden Innenraum des Fahrzeugs ausbildet, so dass die mindestens eine Rohrleitung von warmer Luft umspült und damit temperiert werden kann.

In einer weiteren bevorzugten Ausführungsform der Erfindung weist die Luftheizvorrichtung ein Heizgerät auf, das mit einem flüssigen Brennstoff betreibbar ist. Dies ist besonders vorteilhaft, da das kombinierte Heizungs-/Warmwassersystem hier mit dem Brennstoff betrieben werden kann, der auch als Kraftstoff für das Fahrzeug eingesetzt wird, zum Beispiel Benzin oder Dieselkraftstoff. Es ist so möglich, die Anordnung der mindestens einen Rohrleitung in den Luftkanälen auf Heizungs-/Warmwassersysteme anzuwenden, die mit Benzin oder Dieselkraftstoff betrieben werden.

Gemäß eines zweiten Aspekts zeichnet sich die Erfindung aus durch ein Fahrzeug mit einem kombinieren Heizungs-/Warmwassersystem, das an einer Außenseite des Fahrzeugs angeordnet ist. Es ist so ein großer Gestaltungsspielraum für das kombinierte Heizungs-/Warmwassersystem möglich, insbesondere im Hinblick auf seine Ausmaße und seine Form. Darüber hinaus kann in dem zu beheizenden Innenraum des Fahrzeugs mehr Platz für die Fahrzeuginsassen bereitgestellt werden. Vorzugsweise wird das kombinierte Heizungs-/Warmwassersystem unter dem Fahrzeug oder auf dem Fahrzeug angeordnet. Es ist so möglich, dass sich eine Konvektionsströmung zwischen dem kombiniertem Heizungs-/Warmwassersystems und dem zu beheizenden Innenraum des Fahrzeugs ausbildet und so die in dem mindestens einen Luftkanal angeordnete mindestens eine Rohrleitung von warmer Luft umströmt und temperiert wird.

Ausführungsbeispiele der Erfindung sind im Folgenden anhand der schematischen Zeichnungen erläutert.

Es zeigen:
Figur 1 eine schematische Ansicht einer ersten Ausführungsform eines kombinierten Heizungs-/Warmwassersystems für ein Fahrzeug,
Figur 2 eine schematische Ansicht einer zweiten Ausführungsform des kombinierten Heizungs-/Warmwassersystems für ein Fahrzeug, und
Figur 3 eine schematische Ansicht einer dritten Ausführungsform des kombinierten Heizungs-/Warmwassersystems für ein Fahrzeug.

Elemente gleicher Konstruktion oder Funktion sind figurenübergreifend mit den gleichen Bezugszeichen versehen.

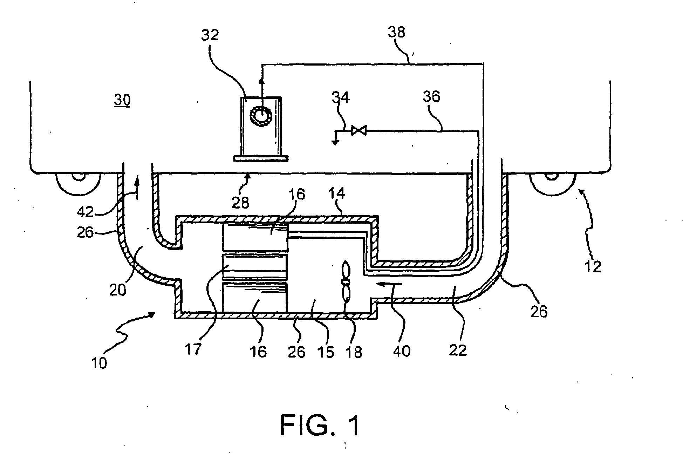

Figur 1 zeigt eine schematische Ansicht einer ersten Ausführungsform eines kombinierten Heizungs-/Warmwassersystems 10 für ein Fahrzeug 12. Das kombinierte Heizungs-/Warmwassersystem 10 hat eine Luftheizvorrichtung 14, einen ersten Luftkanal 20 und einen zweiten Luftkanal 22, mittels denen die Luftheizvorrichtung 14 mit dem Fahrzeug 12, insbesondere einem zu beheizenden Innenraum 30 des Fahrzeug 12 lufttechnisch gekoppelt ist. In einer Ausnehmung 15 der Luftheizvorrichtung 14 ist ein Warmwasserspeicher 16, ein Heizgerät 17 und ein Ventilator 18 angeordnet. Der Warmwasserspeicher 16 dient der Speicherung von Warmwasser zur Nutzung in dem Fahrzeug 12.

Das Heizgerät 17 kann ein elektrisches Heizgerät sein oder ein Heizgerät zur Verbrennung von fossilen Brennstoffen, insbesondere gasförmigen oder flüssigen Brennstoffen sein. Insbesondere kann das Heizgerät 17 mit flüssigen Brennstoffen betrieben werden, die bereits als Kraftstoff für einen Antrieb des Fahrzeugs 12 dienen, wie zum Beispiel Benzin oder Dieselkraftstoff.

Der in der Luftheizvorrichtung 14 angeordnete Ventilator 18 kann in Strömungsrichtung vor oder hinter dem Heizgerät 17 angeordnet sein. Der Ventilator 18 kann auch außerhalb der Luftheizvorrichtung 14 angeordnet sein, beispielsweise in dem zu beheizenden Innenraum 30 des Fahrzeugs 12.

Der erste Luftkanal 20, der zweite Luftkanal 22 und die Luftheizvorrichtung 14 sind mit einer Wärmedämmschicht 26 versehen, durch die die Wärmeverluste der Luftheizvorrichtung 14, sowie des ersten Luftkanals 20 und des zweiten Luftkanals 22 reduziert werden können. Die Wärmedämmschicht 26 kann auch nur in Teilbereichen des ersten Luftkanals 20, des zweiten Luftkanals 22 und der Luftheizvorrichtung 14 angeordnet sein.

In dem Fahrzeug 12 ist ein Wassertank 32 angeordnet. Der Wassertank 32 dient vorzugsweise der Bereitstellung von Brauchwasser. Der Wassertank 32 kann auch außerhalb des zu beheizenden Innenraums 30 des Fahrzeugs 12 oder außerhalb des Fahrzeugs 12 angeordnet sein. In dem Fahrzeug 12 ist weiter eine Zapfstelle 34 angeordnet, über die vorzugsweise durch die Luftheizvorrichtung 14 erwärmtes Brauchwasser aus dem Wassertank 32 entnommen werden kann. Die Zapfstelle 34 ist vorzugsweise in dem zu beheizenden Innenraum 30 des Fahrzeugs 12 angeordnet. Sie kann jedoch auch an anderen Stellen im Fahrzeug 12 angeordnet sein.

Mittels einer ersten Rohrleitung 36 ist der Warmwasserspeicher 16 hydraulisch mit der in dem Fahrzeug 12 angeordneten Zapfstelle 34 hydraulisch gekoppelt. Eine zweite Rohrleitung 38 stellt eine hydraulische Kopplung zwischen dem Warmwasserspeicher 16 und dem Wassertank 32 her. Die Rohrleitungen 36, 38 sind in dem zweiten Luftkanal 22 angeordnet. In der hier dargestellten Ausführungsform der Erfindung ist die Luftheizvorrichtung 14 an einer Außenseite 28 des Fahrzeugs 12 angeordnet. Sie kann jedoch auch alternativ in dem Fahrzeug 12, insbesondere in dem zu beheizenden Innenraum 30 des Fahrzeugs 12 angeordnet sein.

Im Folgenden soll die Funktionsweise der ersten Ausführungsform des kombinierten Heizungs-/Warmwassersystems 10 für ein Fahrzeug 12 detailliert beschrieben werden:

Beim Betrieb der Luftheizvorrichtung 14 wird Luft aus dem Innenraum 30 des Fahrzeugs 12 mittels des Ventilators 18 in einer Strömungsrichtung 40 in die Luftheizvorrichtung 14 eingebracht. Die Luft durchströmt das Heizgerät 17, wobei sie erwärmt und in einer Strömungsrichtung 42 über den ersten Luftkanal in den zu beheizenden Innenraum 30 des Fahrzeugs 12 eingeblasen wird. Mittels des Heizgeräts 17 wird weiter der Warmwasserspeicher 16 erwärmt.

Falls kein Wärmebedarf für die Beheizung des zu beheizenden Innenraums 30 des Fahrzeugs 12 erforderlich ist, wie beispielsweise im Sommer, kann das Heizgerät 17 auch dazu eingesetzt werden, allein den Warmwasserspeicher 16 aufzuheizen. Die Luftheizvorrichtung 14 kann in diesem Fall in einem Außenluftbetrieb betrieben werden, wobei mittels des Ventilators 18 über nicht dargestellte Klappen Außenluft aus der Umgebung angesaugt und wieder an die Umgebung abgegeben werden kann.

Wird an der Zapfstelle 34 Warmwasser gezapft, so fließt Frischwasser aus dem Wassertank 32 in den Warmwasserspeicher 16 nach, wo es durch die Luftheizvorrichtung 14 aufgewärmt werden kann. Da beim Betrieb der Luftheizvorrichtung 14 ständig Luft aus dem zu beheizenden Innenraum 30 des Fahrzeugs 12 über den zweiten Luftkanal 22 in die Luftheizvorrichtung 14 gefördert wird, kann die Temperatur der Rohrleitungen 36, 38, die Wasser führen, mindestens auf einer Temperatur gehalten werden, die nahe der Temperatur des zu beheizenden Innenraums 30 des Fahrzeugs 12 liegt.

Ist die Luftheizvorrichtung 14 außer Betrieb, so ist durch die lufttechnische Kopplung des zu beheizenden Innenraums 30 mit der Ausnehmung 15 der Luftheizvorrichtung 14 sichergestellt, dass in dem zu beheizenden Innenraum 30, in der Ausnehmung 15 der Luftheizvorrichtung 14, im ersten Luftkanal 20 und im zweiten Luftkanal 22 ähnliche Temperaturen herrschen, so dass die Rohrleitungen 36, 38 auch in diesem Betriebszustand der Luftheizvorrichtung 14 in etwa auf der Temperatur des Innenraums 30 des Fahrzeugs 12 gehalten werden kann. Dies ist besonders vorteilhaft, da in diesem Fall verhindert werden kann, dass die Temperatur des Brauchwassers in den Rohrleitungen 36, 38 auch in der kälteren Jahreszeit zu stark absinkt oder gar, beispielsweise im Winter, das Brauchwasser in den Rohrleitungen 36, 38 einfriert. Dies gilt insbesondere dann, wenn die Luftheizvorrichtung 14 nur für einen vergleichsweise kurzen Zeitraum, d.h. einen halben oder einen ganzen Tag, außer Betrieb ist.

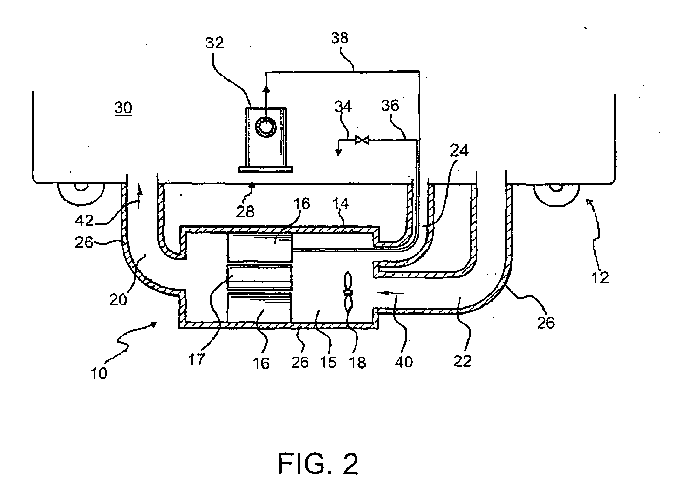

In Figur 2 ist eine zweite Ausführungsform des Heizungs-/Warmwassersystems 10 für ein Fahrzeug 12 gezeigt. Es unterscheidet sich von der ersten Ausführungsform dadurch, dass zwischen der Ausnehmung 15 der Luftheizvorrichtung 14 und dem zu beheizenden Innenraum 30 des Fahrzeugs 12 ein dritter Luftkanal 24 angeordnet ist, wobei die Rohrleitungen 36, 38 in dem dritten Luftkanal 24 angeordnet sind. Der dritte Luftkanal 24 wird nicht aktiv, d.h. mittels eines Ventilators, von Luft durchströmt.

Die Anordnung der Rohrleitungen 36, 38 in dem dritten Luftkanal 24 ist besonders vorteilhaft, da bei einer derartigen Anordnung auch für den Fall, dass eine Luftströmung in dem ersten Luftkanal 20 und dem zweiten Luftkanal 22 unterbrochen ist, zum Beispiel durch Schließen von nicht dargestellten Luftklappen im ersten Luftkanal 20 oder im zweiten Luftkanal 22, warme Luft an den Rohrleitungen 36 und 38 vorbeiströmen und diese temperieren kann. Ist die Luftheizvorrichtung 14 beispielsweise unterhalb des Innenraums 30 des Fahrzeugs 12 angeordnet, so kann Abwärme aus dem Warmwasserspeicher 16 über die Ausnehmung 15 der Luftheizvorrichtung 14 durch konvektive Strömung über den dritten Luftkanal 24 an den Rohrleitungen 36 und 38 vorbei in den Innenraum 30 des Fahrzeugs 12 gelangen kann. Damit kann erreicht werden, dass die Rohrleitungen 36, 38 durch die Abwärme des Warmwasserspeichers 16 temperiert werden können. Bei Anordnung der Luftheizvorrichtung 14 beispielsweise oberhalb des Innenraums 30 des Fahrzeugs 12 kann eine Konvektionsströmung von dem zu beheizenden Innenraum 30 des Fahrzeugs 12 zu der Ausnehmung 15 der Luftheizvorrichtung 14 erfolgen. Damit können die Rohrleitungen 36, 38 durch die Wärme aus dem Innenraum 30 des Fahrzeugs 12 temperiert werden.

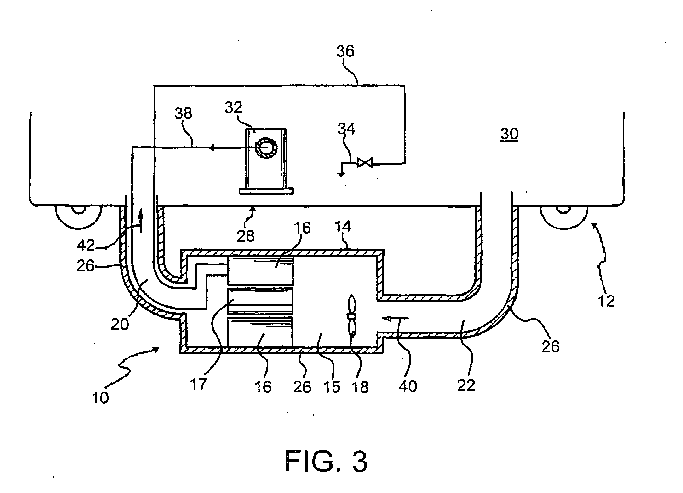

In der in Figur 3 dargestellten dritten Ausführungsform des kombinierten Heizungs-/Warmwassersystems 10 für ein Fahrzeug 12 ist die erste Rohrleitung 36 und die zweite Rohrleitung 38 in dem ersten Luftkanal 20 stromabwärts der Luftheizvorrichtung 14 und stromaufwärts des zu beheizenden Innenraums 30 des Fahrzeugs 12 angeordnet.

Bei Inbetriebnahme der Luftheizvorrichtung 14 wird mittels des Ventilators 18 Luft in Strömungsrichtung 40 aus dem zu beheizenden Innenraum 30 des Fahrzeugs 12 in die Ausnehmung 15 der Luftheizvorrichtung 14 eingebracht. Die Luft durchströmt das Heizgerät 17 und wird erwärmt. Die erwärmte Luft strömt schließlich über den ersten Luftkanal 20 in Strömungsrichtung 42 in den zu beheizenden Innenraum 30 des Fahrzeugs 12. Die in dem ersten Luftkanal 20 angeordneten Rohrleitungen 36 und 38 werden mittels des aus dem Heizgerät 17 austretenden Warmluftstroms temperiert. Die Anordnung der Rohrleitungen 36 und 38 in dem ersten Luftkanal 20 stromabwärts der Luftheizvorrichtung 14 und stromaufwärts des zu beheizenden Innenraums 30 des Fahrzeugs 12 ist besonders für Niedertemperaturheizungssysteme geeignet, das heißt insbesondere, wenn die Temperaturen der Luft nach Austritt aus der Luftheizvorrichtung 14 unterhalb von 100 Grad Celsius liegen, so dass die Temperatur des Brauchwassers in den Rohrleitungen 36 und 38 nicht höher als die Siedetemperatur von Wasser sein kann.

Es versteht sich, dass abhängig von den Anforderungen, auch kombinierte Heizungs-/Warmwassersysteme 10, bei denen nur eine Rohrleitung 36, 38 in einem der Luftkanäle 20, 22, 24 angeordnet ist, von der Erfindung umfasst sind. So kann beispielsweise nur die erste Rohrleitung 38, mit der der Warmwasserspeicher 16 hydraulisch mit einer in dem Fahrzeug 12 angeordneten Zapfstelle 34 gekoppelt ist, in einem der Luftkanäle 20, 22, 24 angeordnet sein. Alternativ kann auch nur die zweite Rohrleitung 36, mit der der Warmwasserspeicher 16 hydraulisch mit einem Wassertank 32 gekoppelt ist, in einem der Luftkanäle 20, 22, 24 angeordnet sein. Die jeweils andere der Rohrleitungen 36, 38 kann in diesen Fällen beispielsweise von dem Warmwasserspeicher 16 direkt jeweils ohne Führung durch die Luftkanäle 20, 22, 24 zu der Zapfstelle 34 oder zu dem Wassertank 32 geführt werden.

## Patentansprüche

1. Kombiniertes Heizungs-/Warmwassersystem (10) für ein Fahrzeug (12), mit
- einer Luftheizvorrichtung (14),
- mindestens einem Luftkanal (20, 22, 24), mit dem die Luftheizvorrichtung (14) lufttechnisch mit einem zu beheizenden Innenraum (30) des Fahrzeugs (12) koppelbar ist,
- einem Ventilator (18) zum Einbringen von Luft in die Luftheizvorrichtung (14)
und mittels dem in der Luftheizvorrichtung (14) erwärmte Luft in den zu beheizenden Innenraum (30) des Fahrzeugs einbringbar ist
**gekennzeichnet durch**
- einen in einer Ausnehmung (15) der Luftheizvorrichtung (14) angeordneten Warmwasserspeicher (16),
- eine erste Rohrleitung (36), mit der der Warmwasserspeicher (16) hydraulisch mit einer in dem Fahrzeug (12) angeordneten Zapfstelle (34) koppelbar ist, und
- eine zweite Rohrleitung (38), mit der der Warmwasserspeicher (16) hydraulisch mit einem Wassertank (32) koppelbar ist,
wobei mindestens eine der ersten und zweiten Rohrleitungen (36, 38) in dem Luftkanal bzw. einem der Luftkanäle (20, 22, 24) angeordnet ist.

2. Kombiniertes Heizungs-/Warmwassersystem (10) nach Anspruch 1, **dadurch gekennzeichnet, dass** ein erster Luftkanal (20) stromabwärts der Luftheizvorrichtung (14) und stromaufwärts des zu beheizenden Innenraums (30) des Fahrzeugs (12) angeordnet ist, und dass mindestens eine der Rohrleitungen (36, 38) in dem ersten Luftkanal (20) angeordnet ist.

3. Kombiniertes Heizungs-/Warmwassersystem (10) nach Anspruch 1, **dadurch gekennzeichnet, dass** ein zweiter Luftkanal (22) stromaufwärts der Luftheizvorrichtung (14) und stromabwärts des zu beheizenden Innenraums (30) des Fahrzeugs (12) angeordnet ist, und dass mindestens eine der Rohrleitungen (36, 38) in dem zweiten Luftkanal (22) angeordnet ist.

4. Kombiniertes Heizungs-/Warmwassersystem (10) nach einem der vorhergehenden Ansprüche, **dadurch gekennzeichnet, dass** die Luftheizvorrichtung (14) ein Heizgerät (17) aufweist, das mit einem flüssigen Brennstoff betreibbar ist.

5. Fahrzeug (12) mit einem kombinierten Heizungs-/Warmwassersystem (10) nach einem der vorhergehenden Ansprüche, **dadurch gekennzeichnet, dass** das kombinierte Heizungs-/Warmwassersystem (10) an einer Außenseite (28) des Fahrzeugs (12) angeordnet ist.

## Claims

1. Combined heating/hot water system (10) for a vehicle (12) comprising
- an air heating device (14),
- at least one air duct (20, 22, 24) by means of which the air heating device (14) can be coupled by air to an interior (30) of the vehicle (12) to be heated,
- a fan (18) for introducing air into the air heating device (14) and by means of which air heated in the air heating device (14) may be introduced into the interior (30) of the vehicle to be heated, **characterized by**
- a hot water reservoir (16) arranged in a recess (15) of the air heating device (14),
- a first pipe duct (36) by means of which the hot water reservoir (16) can be hydraulically coupled to a tap (34) arranged in the vehicle (12), and
- a second pipe duct (38) by means of which the hot water reservoir (16) can be hydraulically coupled to a water tank (32),
at least one of the first and second pipe ducts (36, 38) being arranged in the air duct or one of the air ducts (20, 22, 24).

2. Combined heating/hot water system (10) according to Claim 1, **characterized in that** a first air duct (20) is arranged downstream of the air heating device (14) and upstream of the interior (30) of the vehicle (12) to be heated, and **in that** at least one of the pipe ducts (36, 38) is arranged in the first air duct (20).

3. Combined heating/hot water system (10) according to Claim 1, **characterized in that** a second air duct (22) is arranged upstream of the air heating device (14) and downstream of the interior (30) of the vehicle (12) to be heated, and **in that** at least one of the pipe ducts (36, 38) is arranged in the second air duct (22).

4. Combined heating/hot water system (10) according to one of the preceding claims, **characterized in that** the air heating device (14) comprises a heating device (17) which may be operated by a liquid fuel.

5. Vehicle (12) comprising a combined heating/hot water system (10) according to one of the preceding claims, **characterized in that** the combined heating/hot water system (10) is arranged on an outer face (28) of the vehicle (12).

## Revendications

1. Système combiné eau chaude/chauffage (10) pour un véhicule (12), avec
- un dispositif de chauffage d'air (14),
- au moins un canal d'air (20, 22, 24), avec lequel le dispositif de chauffage d'air (14) peut être couplé de façon aéraulique à un espace intérieur à chauffer (30) du véhicule (12),
- un ventilateur (18) pour introduire de l'air dans le dispositif de chauffage d'air (14) et au moyen duquel l'air chauffé dans le dispositif de chauffage d'air (14) peut être introduit dans l'espace intérieur à chauffer (30) du véhicule,
**caractérisé par**
- un accumulateur d'eau chaude (16) disposé dans un évidement (15) du dispositif de chauffage d'air (14),
- une première conduite tubulaire (36), avec laquelle l'accumulateur d'eau chaude (16) peut être couplé de façon hydraulique à un point de prélèvement (34) disposé dans le véhicule (12), et
- une deuxième conduite tubulaire (38), avec laquelle l'accumulateur d'eau chaude (16) peut être couplé de façon hydraulique à un réservoir d'eau (32),
dans lequel au moins une de la première et de la deuxième conduites tubulaires (36, 38) est disposée dans le canal d'air ou dans un des canaux d'air (20, 22, 24).

2. Système combiné eau chaude/chauffage (10) selon la revendication 1, **caractérisé en ce qu'**un premier canal d'air (20) est disposé en aval du dispositif de chauffage d'air (14) et en amont de l'espace intérieur à chauffer (30) du véhicule (12), et **en ce qu'**au moins une des conduites tubulaires (36, 38) est disposée dans le premier canal d'air (20).

3. Système combiné eau chaude/chauffage (10) selon la revendication 1, **caractérisé en ce qu'**un deuxième canal d'air (22) est disposé en amont du dispositif de chauffage d'air (14) et en aval de l'espace intérieur à chauffer (30) du véhicule (12), et **en ce qu'**au moins une des conduites tubulaires (36, 38) est disposée dans le deuxième canal d'air (22).

4. Système combiné eau chaude/chauffage (10) selon l'une quelconque des revendications précédentes, **caractérisé en ce que** le dispositif de chauffage d'air (14) comporte un appareil de chauffage (17), qui peut fonctionner avec un combustible liquide.

5. Véhicule (12) avec un système combiné eau chaude/chauffage (10) selon l'une quelconque des revendications précédentes, **caractérisé en ce que** le système combiné eau chaude/chauffage (10) est disposé sur un côté extérieur (28) du véhicule (12).
